# EUROPEAN PATENT APPLICATION

(11) **EP 4 472 290 A1**
(43) Date of publication of application: **04.12.2024**
(21) Application number: 23743448.5
(22) Date of filing: 18.01.2023
(51) Int. Cl.: H04W 48/04, H04W 48/08, H04W 60/04

(54) **COMMUNICATION RELATED TO NETWORK SLICES**

(30) Priority: 24.01.2022 KR 20220010105; 27.01.2022 KR 20220012520; 03.05.2022 US 202263337616 P; 15.12.2022 US 202263432706 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Maikowski & Ninnemann Patentanwälte Partnerschaft mbB
(86) International application number: PCT/KR2023/000837
(87) International publication number: WO 2023/140601

(57) **Abstract**

A disclosure of the present specification (disclosure) provides a method for performing communication by an AMF. According to the method, an AMF may receive a registration message including requested NSSAI information. The AMF may transmit a response message to a UE in response to a registration request message.

## Description

### TECHNICAL FIELD

The present disclosure relates to mobile communication.

### BACKGROUND ART

3rd generation partnership project (3GPP) long-term evolution (LTE) is a technology that enables high-speed packet communications. Many initiatives have been proposed for LTE goals, including those aimed at reducing user and provider costs, improving service quality, and expanding and improving coverage and system capacity. 3GPP LTE requires lower cost per bit, improved service availability, flexible use of frequency bands, simple structure, open interface, and proper power consumption of the terminal as upper-level requirements.

Work has begun at the International Telecommunication Union (ITU) and 3GPP to develop requirements and specifications for New Radio (NR) systems. 3GPP must identify and develop the technology components needed to successfully standardize a new Radio Access Technology (RAT) satisfying both urgent market needs and the long-term requirements determined in the ITU-R (International Mobile Telecommunications) international mobile telecommunications (IMT)-2020 process. In addition, NR must be able to use a spectral band in the range of at least 100 GHz that may be used for wireless communications even further into the future.

NR aims to be a single technology framework that covers all usage scenarios, requirements and deployment scenarios, including enhanced mobile broadband (eMBB), massive machine-type-communications (mMTC), ultra-reliable and low latency communications (URLLC), and more. NR may be essentially forward compatible.

In NR, network slices were introduced.

When the terminal performs the registration procedure, it sends the Request NSSAI to the AMF. The AMF then includes only the slice currently supported by the device in the Allowed NSSAI and sends it to the device. The AMF sends the Registration accept to the device, along with the device's Registration area. At this time, the AMF shall ensure that all slice included in the Allowed NSSAI are available to the terminal within the registration area assigned to the terminal. The registration area is assigned in the form of a TA list including multiple TAs. Therefore, if a slice is not available in the TA in which the terminal is currently located (e.g., TA 1), the AMF cannot include it in the Allowed NSSAI, even if the slice is available in all other TAs in the terminal's registration area (e.g., all TAs other than TA 1). Therefore, even if a terminal moves to a region within its registration area where the slice becomes available (e.g., to one of all other TAs other than the first TA), the terminal will not be able to use the slice.

If an AMF sends a Rejected NSSAI to a device with the cause that the slice is not allowed in the current registration area, even if the device is located in a TA that supports the slice, the device will not be able to use it until it leaves the registration area.

Alternatively, to address this issue, the AMF could set the registration area to include only the current TA of the terminal, so that the UE can use that slice. However, this would result in an overly narrow registration area, requiring the device to perform frequent mobility registration procedures.

### DISCLOSURE

### TECHNICAL PROBLEM

Accordingly, a disclosure of the present specification has been made in an effort to solve the aforementioned problem.

### TECHNICAL SOLUTION

To address the aforementioned problems, one aspect of the present disclosure provides a method for an AMF to perform communication. The method may include: receiving a registration message from a UE including requested NSSAI information; and, in response to the registration request message, transmitting a response message to the UE.

To address the aforementioned problems, one aspect of the present disclosure provides a method for a UE to perform communication. The method may include: transmitting a registration message including requested NSSAI information to an AMF; and receiving, in response to the registration request message, a response message from the AMF.

### ADVANTAGEOUS EFFECTS

According to the present disclosure of the present specification, it is possible to solve the problems of the prior art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of 5G system architecture to which implementations of the present disclosure is applied.
FIG. 5 is another exemplary diagram showing the structure of a radio interface protocol (Radio Interface Protocol) between the UE and the gNB.
FIGS. 6a and 6b show an example of a registration procedure to which implementations of the present disclosure is applied.
FIGS. 7a and 7b show examples of PDU session establishment procedures to which an implementation of the present disclosure is applied.
FIG. 8 illustrates an example of a slice placement.
FIG. 9 illustrates an example of a procedure according to the first example of the present disclosure.
FIG. 10 illustrates an example of a procedure according to the sixth example of the present disclosure.
FIG. 11 illustrates an example of a procedure according to the eighth example of the present disclosure.
FIGS. 12a through 12c illustrate an example of a UE-triggered service request procedure.
FIG. 13 illustrates an example of a network-triggered service request procedure.
FIG. 14 illustrates an example of a UE configuration update procedure.
FIG. 15 illustrates an example of a procedure for selectively deactivating the UP connection of a CN-initiated existing PDU session.
FIG. 16 illustrates an example of an inter NG-RAN handover procedure.
FIGS. 17a and 17b illustrate an example of an inter NG-RAN handover procedure.
FIG. 18 illustrates an example of a procedure according to the tenth example of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the present disclosure of the present specification

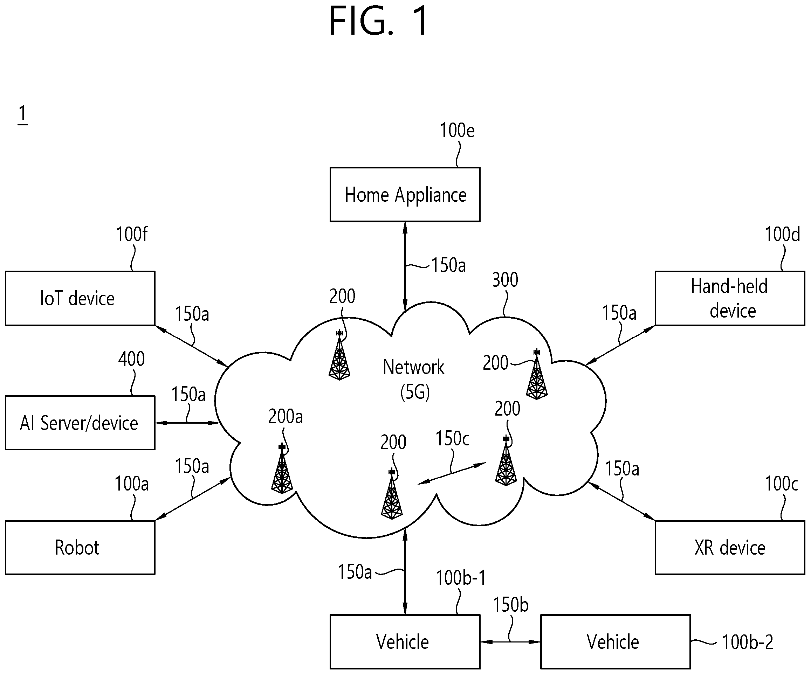

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

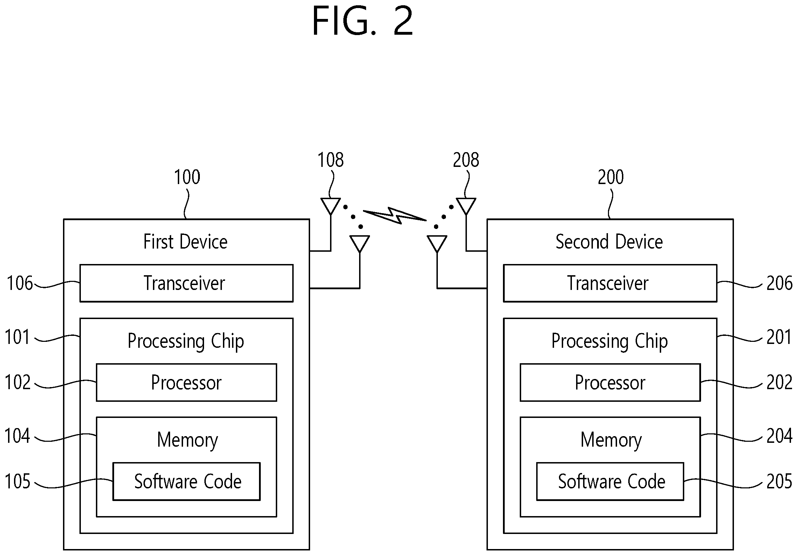

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) (or packet data units) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

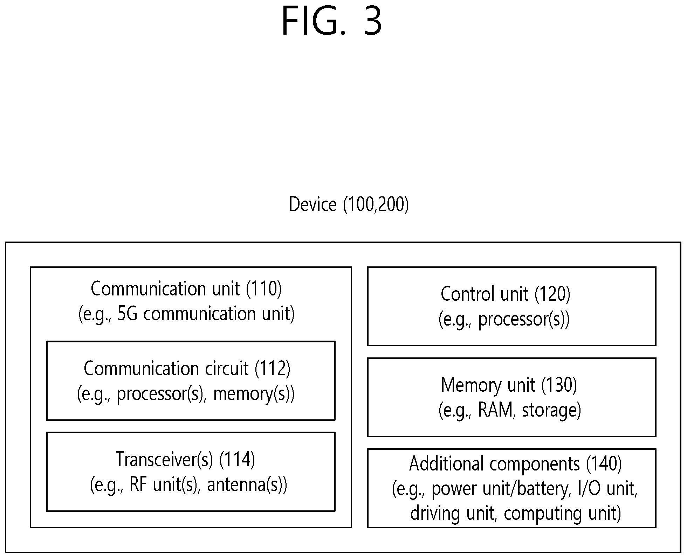

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

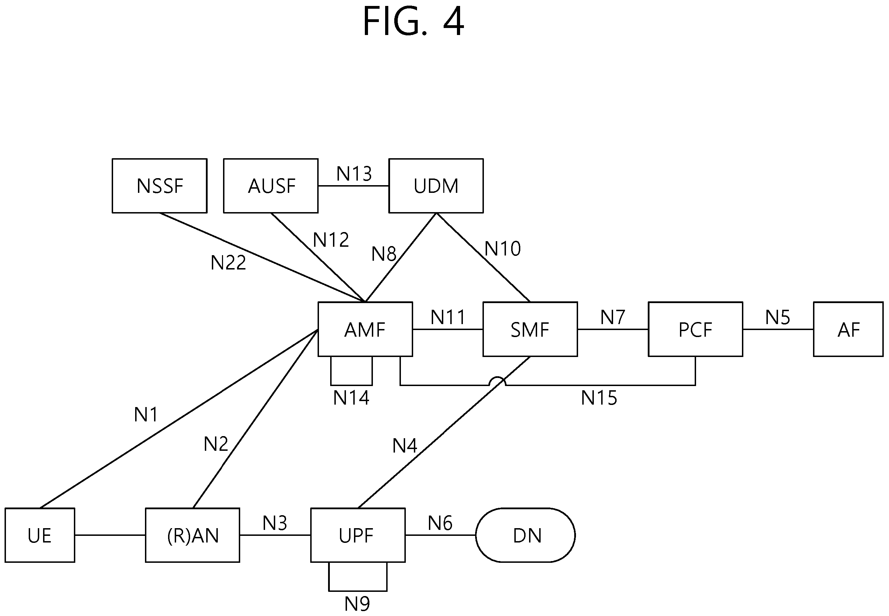

**FIG. 4** **shows an example of 5G system architecture to which implementations of the present disclosure is applied.**

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: represents a reference point between PCF and AMF, and a reference point between AMF and PCF of a visited network in a roaming scenario.
- N16: Reference point between two SMFs, (in roaming case between SMF in the visited network and the SMF in the home network).
- N22: Reference point between the AMF and the NSSF.
- N30: Reference point between PCF and NEF.
- N33: Reference point between AF and NEF.

In some cases, a couple of NFs may need to be associated with each other to serve a UE.

For reference, in FIG. 4, an AF by a third party other than an operator may be connected to 5GC through NEF.

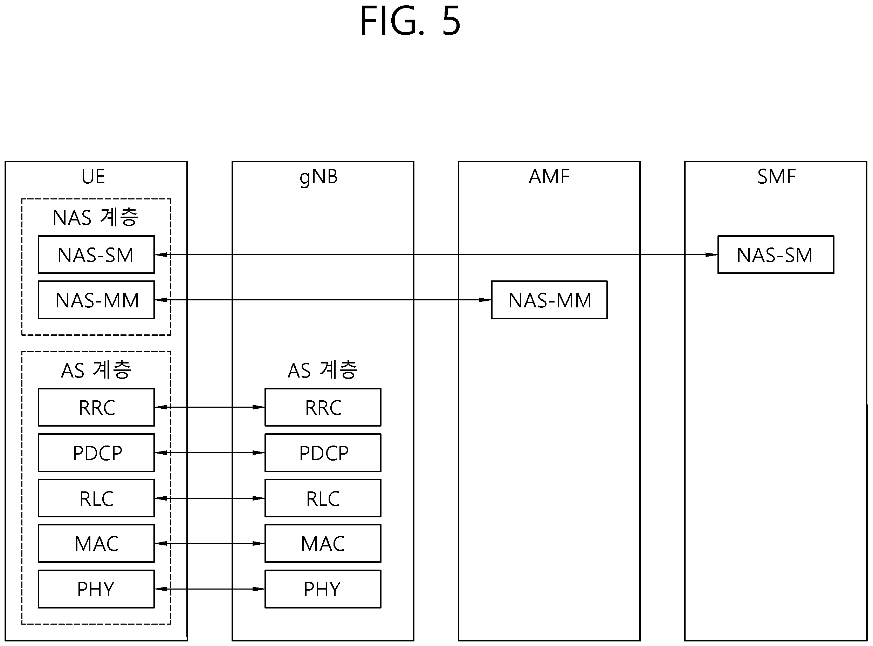

**FIG. 5** **is another exemplary diagram showing a structure of a radio interface protocol between a UE and a gNB.**

The radio interface protocol is based on the 3GPP radio access network standard. The radio interface protocol is horizontally composed of a physical layer, a data link layer, and a network layer, and is vertically divided into a user plane for transmission of data information and a control plane for transfer of control signal (signaling).

The protocol layers may be divided into L1 (first layer), L2 (second layer), and L3 layer (third layer) based on the lower three layers of the open system interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. In addition, data is transmitted between different physical layers, that is, between the physical layers of a transmitting side and a receiving side through a physical channel.

The second layer includes a medium access control (MAC) layer, a radio link control (RLC) layer, and a packet data convergence protocol (PDCP) layer.

The third layer includes radio resource control (hereinafter abbreviated as RRC). The RRC layer is defined only in the control plane and is in charge of control of logical channels, transport channels, and physical channels related to configuration, reconfiguration and release of radio bearers. In this case, RB refers to a service provided by the second layer for data transfer between the UE and the E-UTRAN.

The NAS layer performs functions such as connection management (session management) and mobility management.

The NAS layer is divided into a NAS entity for mobility management (MM) and a NAS entity for session management (SM).
1) NAS entity for MM provides the following functions in general.
   NAS procedures related to AMF include the following.
   - Registration management and access management procedures. AMF supports the following functions.
   - Secure NAS signal connection between UE and AMF (integrity protection, encryption)
2) The NAS entity for SM performs session management between the UE and the SMF.
   The SM signaling message is processed, that is, generated and processed, at an NAS-SM layer of the UE and SMF. The contents of the SM signaling message are not interpreted by the AMF.
   - In the case of SM signaling transmission,
   - The NAS entity for the MM creates a NAS-MM message that derives how and where to deliver an SM signaling message through a security header representing the NAS transmission of SM signaling and additional information on a received NAS-MM.
   - Upon receiving SM signaling, the NAS entity for the SM performs an integrity check of the NAS-MM message, analyzes additional information, and derives a method and place to derive the SM signaling message.

Meanwhile, in FIG. 5, the RRC layer, the RLC layer, the MAC layer, and the PHY layer located below the NAS layer are collectively referred to as an access stratum (AS).

A network system (i.e., 5GC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, AMF performs registration management (RM: Registration Management) and connection management (CM: Connection Management) for 3GPP access as well as non-3GPP access.

A Multi-Access (MA) PDU session using both 3GPP access and non-3GPP access may be used.

The MA PDU session is a PDU session that can be serviced simultaneously with 3GPP access and non-3GPP access using one PDU session.

### <Registration Procedure>

A registration procedure is described. Section 4.2.2.2 of 3GPP TS 23.502 V16.3.0 (2019-12) can be referred.

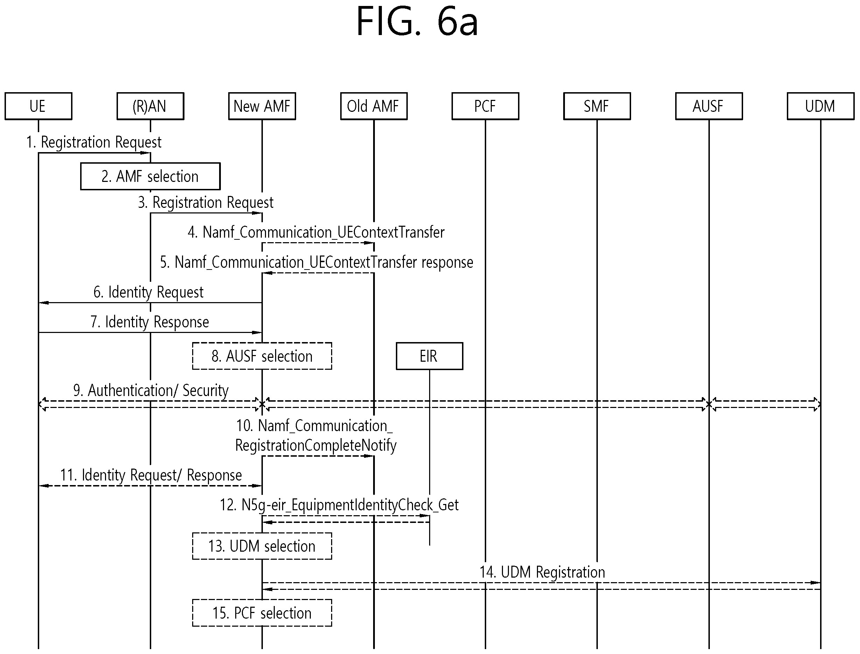

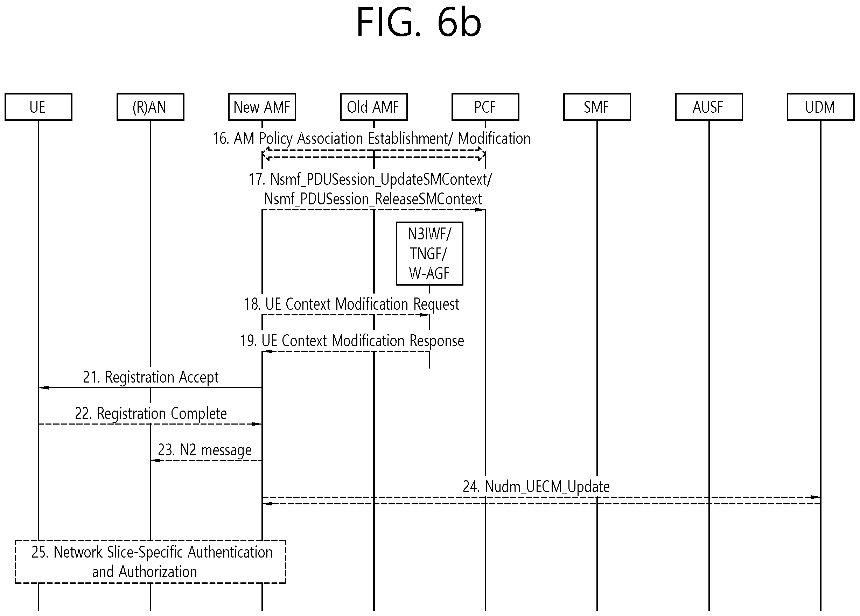

FIGS. 6a and 6b show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6a and 6b applies on all these registration procedures, but the periodic registration update need not include all parameters that are used in other registration cases.

The general registration procedure in FIGS. 6a and 6b is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6a are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6b, which follow the procedures of FIG. 6a, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAIs provided in the Registration Acceptance message are valid in the registration area and Allowed NSSAIs applied to all PLMNs with tracking zones included in the registration zone. The Mapping Of Allowed NSSAI is the mapping of the HPLMN S-NSSAI to each Single Network Slice Selection Assistance Information (S-NSSAI) in the Allowed NSSAI. The Mapping Of Configured NSSAI is the mapping of the HPLMN S-NSSAI to each S-NSSAI in the Configured NSSAI for the serving PLMN.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

### <PDU session establishment procedure>

Describes the PDU session establishment procedure. Reference may be made to section 4.3.2 of 3GPP TS 23.502 V16.3.0 (2019-12).

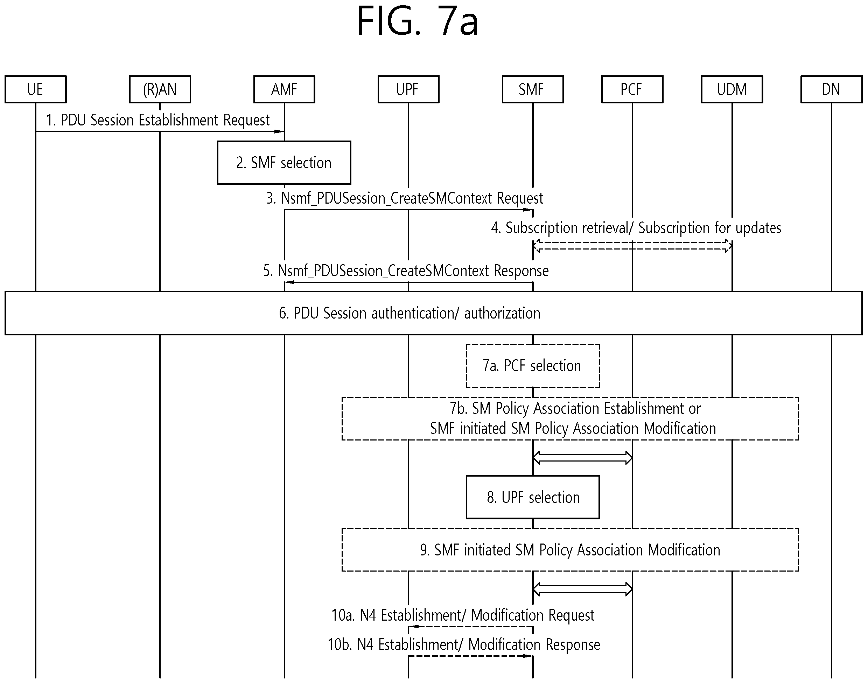

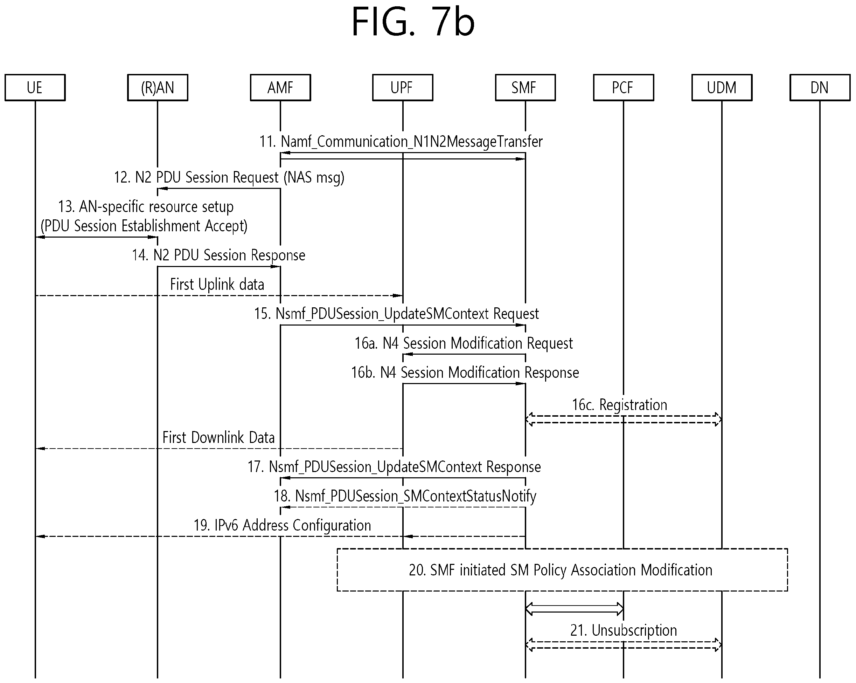

**FIGS. 7a** **and** **7b** **show examples of PDU session establishment procedures to which an implementation of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 7a and 7b specify the procedures for establishing PDU sessions associated with a single access type at a given time.

The procedure shown in FIGS. 7a and 7b assumes that the UE has already registered on the AMF thus unless the UE is emergency registered the AMF has already retrieved the user subscription data from the UDM.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### II. technology and procedures related to the present disclosure

The following describes techniques and procedures related to the present disclosure of the present disclosure. The following may also describe examples of problems that the present disclosure seeks to solve.

Improvements to network slicing are being discussed.

There are scenarios where the S-NSSAI of a Requested NSSAI is rejected because the S-NSSAI of the Requested NSSAI is not supported in a neighboring TA, even though it may be supported in that TA. The AMF may need to include neighboring TAs in the registration area if it determines that the S-NSSAI of an Allowed NSSAI should be assigned a wider registration area (RA) to take into account the mobility of the terminal. If the AMF performs this operation and the rejection reason code sent by the AMF to the UE is "not supported by the Registration Area (RA)", the UE shall not attempt to register to the rejected S-NSSAI until the UE moves outside the RA. If this is undesirable, the AMF may set the RA to include the current TA and the TA where the rejected S-NSSAI is not supported. Then, when the UE moves to a nearby TA that supports the rejected S-NSSAI, the UE may re-request the rejected S-NSSAI. If the network slice requested by the UE is not available in the current TA, but is available in another TA belonging to the terminal's RA, then it is necessary to discuss how to enhance the functionality to allow the terminal to use that network slice. In other words, there is a need to discuss how to allow the UE to request these network slices again without forcing the AMF to reduce the size of the RA.

The potential for further improvements to network slicing should be investigated.

The need and potential mechanisms for achieving these goals may be discussed, such as the following examples

For example, it is necessary to discuss whether and how to initiate registration for rejected S-NSSAIs that were rejected by the first TA in the RA but may be available in other TAs in the RA.

Note that in the following, slice refers to a network slice.

According to the prior art, when a terminal needs a slice, the terminal may request the slice it wants to use by including the required slice in the Requested NSSAI. There may be cases where the network is unable to honor the terminal's request. For example, the slice requested by the terminal may not be available in the terminal's current location. In such cases, the AMF may include the slice requested by the terminal in a rejected NSSAI and forward the rejected NSSAI to the terminal, indicating to the terminal that the slice is not available. At this time, the AMF may also provide the terminal with a cause for the reject. Currently, three cause values are supported

The examples in Table 1 below show examples of cause values associated with a rejected S-NSSAI (or rejected NSSAI) according to the prior art.

**[Table 1]**

| Rejected S-NSSAI: | |
|---|---|
| Cause value (octet 3) | |
| Bits | |
| 4 3 2 1 | |
| 0 0 0 0 | S-NSSAI not available in the current PLMN or SNPN |
| 0 0 0 1 | S-NSSAI not available in the current registration area |
| 0 0 1 0 | S-NSSAI not available due to the failed or revoked network slice-specific authentication and authorization |
| All other values are reserved. | |

For example, as shown in the example in Table 1, the cause value for a rejection may include information such as: i) S-NSSAI is not available in the current PLMN or SNPN, ii) S-NSSAI is not available in the current registration area, or iii) S-NSSAI is not available due to network slice-specific authentication and authorization failure or revocation.

For example, there may be cases where a network slice is not supported in the current registration area, i.e., the base station where the terminal is currently located does not support the slice. In this case, the AMF might set the cause value to 0001 to inform the terminal that it is not supported in the current registration area. A terminal that receives this cause value will not request the slice until it leaves the current registration area, because the terminal knows that the network slice is not supported in the current registration area.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

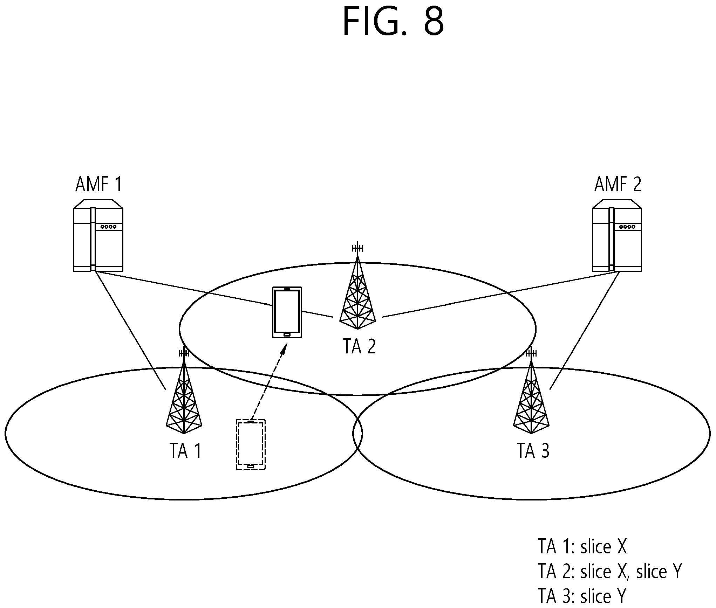

### FIG. 8 shows an example of slice placement.

The example in FIG. 8 shows a situation where a terminal has moved from a base station in TA1 to a base station in TA2. If the terminal was in the TA 1 region, the terminal may have requested slice X and slice Y with the requested NSSAI. In this case, the AMF may decide to set the terminal's registration area to {TA1,TA2} to avoid frequent mobility registrations considering the terminal's mobility.

In this case, because the TA 1 region only supports slice X, the AMF can send an allowed NSSAI including slice X to the terminal and a rejected NSSAI including slice Y to the terminal, informing the terminal that the cause is not available in the current registration area.

If the terminal subsequently moves to a TA2 base station, the terminal does not perform a new registration procedure because it is in the same registration area. In this case, the terminal will only use slice X even though it is in an area where slice Y is available.

Although the terminal could arbitrarily request slice Y from TA2 again, this could cause unnecessary signaling because the terminal does not know if the network can accept that slice or not.

The present disclosure proposes a method to effectively address these issues.

The present disclosure, described below, proposes a method to address these issues.

### III. The present disclosure

The present disclosure described herein may be implemented in one or more combinations, such as combinations comprising at least one of those described below. While each of the figures illustrates an embodiment of each disclosure, embodiments of the figures may be implemented in combination with each other.

The description of the methods proposed in the present disclosure may comprise any combination of one or more of the actions/compositions/steps described below. The following methods described below may be performed or used combinatorially or complementarily.

The following methods are disclosed herein to address the various problems described above. The following methods may be performed or used combinatorially or complementarily.

Hereinafter, the present disclosure will be described with reference to Examples 1 through 10 of the present disclosure. The first through tenth examples of the present disclosure described herein may be implemented in combination. As a point of reference, the tenth example of the present disclosure may represent a specific embodiment based on a combination of at least one of the first through ninth examples of the present disclosure.

### 1. A first example of the present disclosure

The first example of the present disclosure describes one example of how an AMF may provide TA information for which a slice is rejected to a terminal. For example, according to the first example of the present disclosure, the AMF may send a rejected NSSAI to the terminal and include the TA information for which the slice was rejected.

If the rejected NSSAI is not available in the current registration area, the AMF may send the rejected NSSAI to the terminal along with the TA information for which the NSSAI is not available.

For example, in the example of FIG. 8, at TA1, the terminal may request slice X and slice Y as the requested NSSAI. In this case, according to the first example of the present disclosure, the AMF may transmit an allowed NSSAI including slice X to the terminal and a rejected NSSAI including slice Y to the terminal, wherein the AMF may transmit TA information to the terminal that slice Y is not available.

In this situation, the AMF of the terminal may decide to set the registration area of the terminal to {TA1, TA2}. In this case, since slice Y is not available only in TA1, the AMF can tell the terminal that it is rejected only in TA1.

Alternatively, if slice Y is rejected, the AMF may send information to the terminal that enables slice Y to be used, for example, information related to TA2. This is because TA2 supports slice Y. The AMF may send this information to the terminal within the registration area, or the AMF may send this information to the terminal based on information that the network has, regardless of the registration area.

Note that the operation of providing additional information when a rejected NSSAI is applied or an AMF becomes available may be an optional operation, and if the network does not provide additional information for a slice, the terminal should treat the slice in the same way as it would otherwise.

For this method, the registration area can be large or the information sent down to the terminal can be large. For example, for a terminal, RA={TA1,TA2, TA3,TA4, .. TA10}, assuming that slice Y is not supported in TA1 only, but slice Y is supported in all other regions. In this case, in order for the AMF to provide additional information related to the slice to the terminal, the TA information available for the slice must be transmitted, e.g., {TA2, TA3, TA4, ... TA10}. Therefore, the larger the RA, the more information the AMF may need to transmit to the terminal.

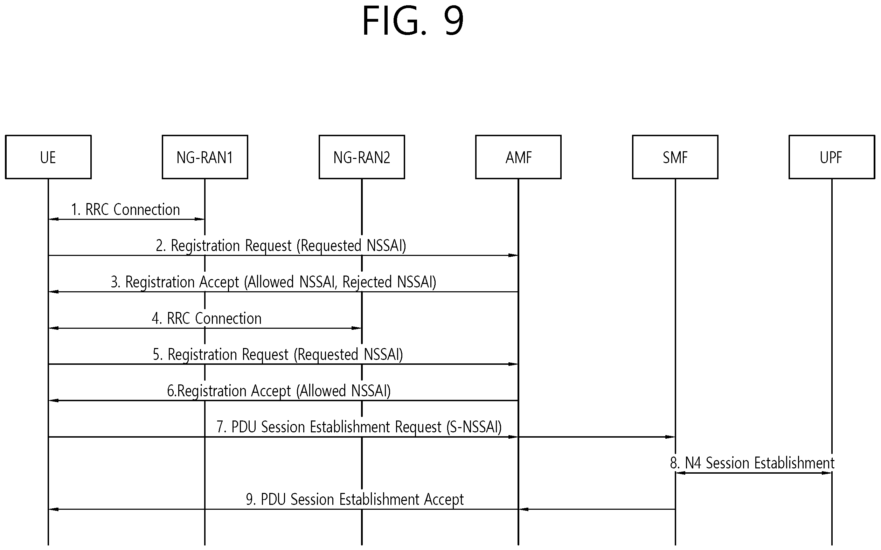

Of note, the examples of FIG. 9 below may be applicable to the various operations and/or procedures described in the first example of the present disclosure, as well as the first through tenth examples of the present disclosure.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 9** **illustrates an example of a procedure according to the first example of the present disclosure.**

The example of FIG. 9 illustrates a procedure based on the first example of the present disclosure. It is assumed that NG-RAN1 (e.g., cell1) is set to TA 1 and NG-RAN2 (e.g., cell2) is set to TA 2. It is further assumed that slice X is supported in NG-RAN1 and slice X and slice Y are supported in NG-RAN2. NG-RAN1 and NG-RAN2 can be different cells belonging to the same base station.

Step 1. Assume that the terminal is connected to the base station via NG-RAN1.

Step 2. The terminal may send a registration request message by including slice X and slice Y in the Requested NSSAI in order to use slice X and slice Y.

Step 3. The AMF may send an registration acceptance message to the terminal. For example, the registration acceptance message may include Allowed NSSAI information and Rejected NSSAI information. For example, since the terminal is currently connected over NG-RAN1, and slice Y is not supported on NG-RAN1, the AMF may set Allowed NSSAI = {slice X} and Rejected NSSAI = {slice Y}, together with information to the terminal that slice Y is available on TA2.

Alternatively, a separate IE may be defined that is not a Rejected NSSAI, and the AMF may send this separate IE to the terminal. In this case, the AMF may send the terminal the TA list information for which slice Y is available. For example, the AMF may send the terminal information in the form of Conditional NSSAI = {slice Y - Registration required - supported area = [TA2]} to the terminal in the following format. This can be used to inform the terminal that it must perform a registration procedure in order to use slice Y.

In addition, the AMF may set the registration area of the terminal to {TA1, TA2} in consideration of the mobility of the terminal and inform the terminal of the registration area. Conditional NSSAI can have the same meaning as partially allowed NSSAI or partially rejected NSSAI. For example, the AMF can send a partially allowed NSSAI in the form: partially allowed NSSAI = {slice Y - Registration not required - supported area = [TA2]} to a terminal in the form of a partially allowed NSSAI. As another example, the AMF may send a partially rejected NSSAI to the terminal in the following format: partially rejected NSSAI = {slice Y - Registration required - supported area = [TA2]}.

Alternatively, the IE name can also indicate whether registration is required. For example, a partially allowed NSSAI might include slice information that can be used without performing registration, and a partially rejected NSSAI might include slice information that can be used after performing registration.

Step 4. The terminal can leave NG-RAN1 and move to NG-RAN2.

Step 5. Based on the information received in step 3, the terminal knows that slice Y is available on NG-RAN2 and can perform the registration procedure to use slice Y. At this time, in order to use both slice X and slice Y, the AMF may set the Requested NSSAI = {slice X, slice Y}.

Step 6. The AMF can set Allowed NSSAI = {slice X, slice Y] because the terminal is in a region where both slice X and slice Y are supported. At this point, the AMF can set the terminal's Registration Area to {TA2}, where both slice X and slice Y are supported.

Step 7. The terminal may send a PDU Session Establishment Request message to create a PDU Session using slice Y. At this time, the terminal sets the slice Y information and other necessary information such as DNN based on the UE route selection policy (URSP) rule. At this time, the terminal sets the slice Y information and other necessary information such as DNN based on the UE route selection policy (URSP) rule.

Step 8. The SMF performs the UPF and N4 Session Establishment procedures to create a PDU Session. If necessary, it follows the procedures described in the examples in Figure 7a and Figure 7b to establish a PDU Session.

Step 9. The SMF may send a PDU Session Establishment Accept message to the terminal to inform the terminal that the PDU session has been successfully established.

The previous example described the AMF sending a TA list with information related to whether a slice is supported or not, but this is just an example. If you need to support smaller units, the AMF might send a cell list instead of a TA list. Alternatively, the AMF could send a TA + cell list at the same time.

### 2. A second example of the present disclosure

According to a second example of the present disclosure, when a terminal enters a new region and a slice becomes available, the AMF may notify the terminal that the slice is available by signaling that the slice is available.

If the terminal moves within the registration area and then moves to an area where the rejected NSSAI becomes available, the AMF may send signaling to the terminal based on this. For example, in the example in Figure 8, if a terminal in TA1 requests slice X and slice Y as requested NSSAIs, the AMF may send the allowed NSSAI to the terminal as slice X and the rejected NSSAI to the terminal as slice Y. In such a case, the terminal moves to TA2 and the rejected NSSAI becomes available. In this case, if the AMF is aware that the terminal has moved to TA2, the AMF may notify the terminal that slice Y is available through NAS signaling (e.g., UCU procedure). Alternatively, if the AMF is aware that the terminal has moved to TA2, the AMF may update the terminal's rejected NSSAI to allow the terminal to request slice Y again.

In this method, if the terminal moves to idle mode, the AMF may not realize that the terminal has moved to TA2 region. In this case, the AMF may notify the terminal that the rejected NSSAI is available after the terminal is placed in connected mode by MO or MT signaling / data.

### 3. A third example of the present disclosure

According to a third example of the present disclosure, the AMF may send a Rejected NSSAI to the terminal and also send a new cause.

For example, the AMF may send a rejected NSSAI to the terminal with a new cause value. According to the prior art, when the slice requested by the terminal is not homogenously available in the registration area determined by the AMF, the AMF sends the rejected NSSAI and sets the cause to "S-NSSAI not available in the current registration area", i.e., the AMF sends the cause without distinguishing whether the slice is available in the part of the registration area that the AMF is sending to the terminal.

In accordance with Example 4 of the present disclosure, when the AMF assigns a cause for the actual rejected NSSAI, the AMF may set the cause to "S-NSSAI not available in the current registration area" if the registration area is not all available. If slice is available in some areas of the registration area, the AMF may send a new cause (e.g. S-NSSAI not available in the current tracking area).

For example, a terminal that receives a new cause may be allowed to re-request a rejected slice based on the new cause, if the terminal moves within the registration area and moves from the current TA to another TA.

The operation according to the third example of the present disclosure clearly tells the terminal which slice can be re-requested and which slice cannot be re-requested, but does not provide accurate TA information as described in the first example of the present disclosure. Therefore, the terminal may re-request the slice even though it is actually in a TA where the slice is not available.

### 4. the fourth example of the present disclosure

In accordance with a fourth example of the present disclosure, the terminal may update the rejected NSSAI based on the SIB information transmitted by the base station.

Based on the SIB information transmitted by the base station, the terminal can clear the slice transmitted by the base station from the rejected NSSAI.

The base station may use SIB to transmit slice information supported by the base station. This is to assist the terminal in cell (re)selection and does not affect the NAS protocol. When the terminal receives a rejected NSSAI from the network, if the slice information that the base station sends to the SIB includes a slice that is included in the rejected NSSAI, the terminal can clear the slice from the rejected NSSAI. This allows the terminal to move and enter a new TA, and if a slice is available in the new TA, the terminal may re-request this slice, i.e., the terminal may re-request the S-NSSAIs deleted from the rejected NSSAI by performing the registration procedure. Subsequent operation follows conventional operation. For example, the terminal may receive a new allowed NSSAI and request a PDU Session for that slice.

To do this, the AS layer of the terminal needs to inform the NAS layer of the terminal of the slice information transmitted by the SIB when cell (re)selection occurs. Based on this, the NAS layer of the terminal can compare the rejected NSSAI with the slice information transmitted by the base station and decide which slice to remove from the rejected NSSAI.

To prevent the terminal from updating for all rejected NSSAIs, based on a specific cause given by the network, the terminal may be allowed to update rejected NSSAIs only for that cause. For example, as in Example 3 of the present disclosure, a new cause may be defined and only rejected S-NSSAIs with that cause may be updated by the terminal if they are included in the slice information transmitted by the base station. Instead of using a new cause, the existing "S-NSSAI not available in the current registration area" cause may be used.

To prevent many terminals from entering the TA at once and performing registration at the same time, AMF may perform the following operations. For example, when providing a cause to a terminal that allows it to clear a rejected NSSAI, the AMF may consider the terminal's travel path, the number of terminals/slices to which the cause is assigned, the load situation of the base station, etc. to prevent too many terminals from signaling at once. In addition, a general or slice specific MM / SM back-off timer can be given to some terminals to apply the existing NAS level congestion control.

### 5. The fifth example of the opening of the present disclosure

In accordance with a fifth example of the present disclosure, the terminal may update the allowed NSSAI based on SIB information transmitted by the base station.

The operation according to the fifth example of the present disclosure operates in a similar manner to the fourth example of the present disclosure, i.e., the terminal may update the rejected NSSAI based on the SIB information. Furthermore, the terminal may include the slices deleted from the rejected NSSAI in the allowed NSSAI without having to perform re-registration.

A terminal may request a PDU session establishment if it needs a PDU session for a slice. The AMF may give special cause to prevent the terminal from updating all rejected NSSAIs to allowed NSSAIs, as in examples 3 and/or 4 at the beginning of the present disclosure.

This means that a terminal can only update to an allowed NSSAI if it receives a rejected NSSAI with a specific cause. To determine the cause, the AMF may check whether network slice selection assistance information (NSSAI) is required for the slice, whether the slice is available within the terminal's registration area, and whether NSAC must be performed. For example, the AMF may determine cause so that a slice that requires NSSAA or a slice that requires NSAC does not perform the action of updating to the allowed NSSAI. Alternatively, you can have the AMF perform an NSSAA / NSAC on the slice that needs to perform an NSSAA / NSAC in advance and only send a new cause to the terminal if it succeeds.

In addition, when the terminal performs PDU Session Establishment, it may send information indicating that the slice requested by the AMF has been updated from a rejected NSSAI to an allowed NSSAI. Alternatively, when the terminal performs a Service Request, it can send a list of slices that have been changed from rejected NSSAI to allowed NSSAI along with information indicating that they have been updated.

Based on this information, or even if the terminal does not send such information, the AMF may store the rejected NSSAI in the UE context with a cause indicating that the AMF may be updated with an allowed NSSAI. Based on this, the AMF can then double-check if the slice is available at the terminal's location. If the slice is available, the AMF can add it to the allowed NSSAIs in the UE context. If the slice is not available, the AMF may reject the PDU Session Establishment request from the terminal and send a new allowed NSSAI / rejected NSSAI to the terminal via the UCU procedure.

In order to prevent many terminals from entering the TA and performing PDU Session Establishment at the same time, the AMF can prevent too many terminals from signaling at once by considering the movement path of the terminal, the number of terminals/slices to which the cause is assigned, the load situation of the base station, etc. when assigning a cause to the terminal that allows updating to the allowed NSSAI. In addition, a general or slice specific MM / SM back-off timer can be provided to some terminals to apply the existing NAS level congestion control.

### 6. The sixth example of the present disclosure

Example 6 of the present disclosure describes a specific example according to Example 4 and/or Example 5 of the present disclosure.

According to a sixth example of the present disclosure, the UE may remove the rejected S-NSSAI based on cell broadcast information.

In the scheme according to Example 6 of the beginning of the present disclosure, it is decided to follow the current mechanism as much as possible and avoid additional signaling between the UE and the network. When the UE establishes the Requested NSSAI, the UE shall not include a rejected S-NSSAI from the current registration area in the Requested NSSAI until the UE leaves the current registration area. Therefore, even if the rejected S-NSSAI is available at the current location, the UE shall not be able to use the slice unless the UE leaves the registration area.

The slice information broadcast in NG-RAN may be utilized. The "slice information" broadcast as part of the SIB message may be used. "Slice information" generally refers to the slice information available for a cell. For example, the "slice information" may be the slice group information provided to the UE via NAS signaling. By using the broadcasted slice information, when a UE camps on a cell, the UE can obtain information regarding the available slices of the camping cell. Based on this, if the "slice information" broadcast by the SIB message including a rejected S-NSSAI, the UE may remove the slice from the rejected S-NSSAI. And if necessary, the UE may perform the registration procedure to request the previously rejected slice in the current registration area.

Procedures similar to those according to the prior art may be used and no additional changes are required for inter-object signaling. All changes are internal UE operation, i.e. if the S-NSSAI is included in the slice information broadcast by the camping cell, the UE may remove the rejected S-NSSAI.

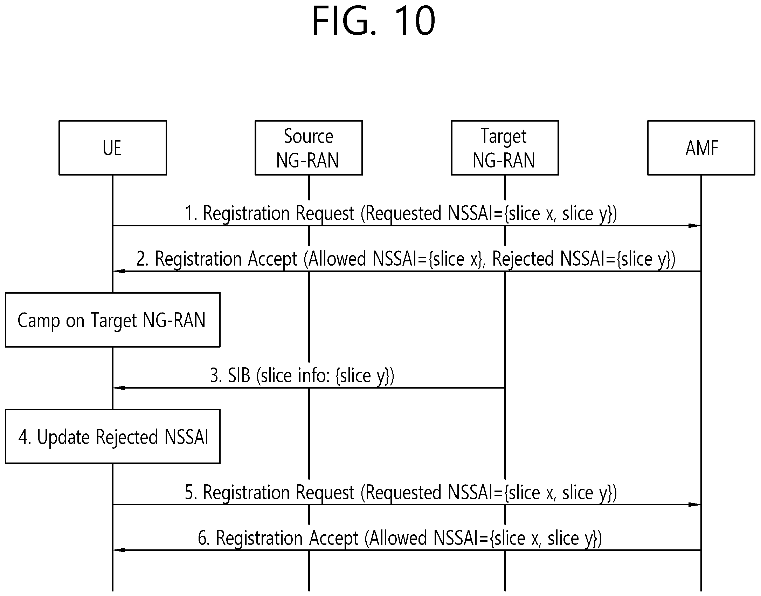

The example of FIG. 10 illustrates one example of a procedure according to the sixth example of the present disclosure.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 10** **illustrates an example of a procedure according to the sixth example of the present disclosure.**
1. The UE is camping in a cell of the source NG-RAN and may send a registration request message including the Requested NSSAI = {slice x, slice y}.
2. the AMF may determine the UE's registration area (e.g., {TA1, TA2}) to include the TA of the source NG-RAN and the target NG-RAN. And, since slice y is not supported by the source NG-RAN, the AMF may send a registration acceptance message to the UE including allowed NSSAI = {slice x} and rejected NSSAI = {slice y}.
3. The UE can move and camp-on to a cell in the target NG-RAN. The UE may receive slice information via SIB message and recognize that slice y is available in the current cell.
4. The UE shall remove slice y from the rejected S-NSSAI. When the UE removes the rejected S-NSSAI, the UE shall check the cause of the rejected S-NSSAI. If the cause of the rejected S-NSSAI is that it was rejected for the whole PLMN or due to slice authentication, the rejected S-NSSAI shall not be removed.

Describes an example where the UE has group information of incoming slice information where Group = {slice A, slice B, slice C} and Rejected NSSAI = {slice A cause = PLMN, slice B cause = RA}. Here, slice A cause = PLMN can mean that the reason slice A was rejected is that it is not currently available in PLMN. slice B cause = RA can mean that the reason slice B was rejected is that it is not currently available in the Registration Area.

If the NG-RAN sends slice information to the UE in the form of groups, multiple slices may be mapped to one group. In this case, the operation of the UE may be performed in a similar manner as described earlier. For example, based on the slice mapped to a group, the UE may decide whether to discard the rejected S-NSSAI. For example, Group X may be {slice A, slice B, slice C}, and the NG-RAN may transmit the Group X information to the UE. The terminal can know that Group X represents slice A, slice B, and slice C through NAS signaling.

If Rejected S-NSSAIs = { slice A cause = entire PLMN, slice B cause = Registration area}, when the UE receives Group X information through the SIB, the UE may delete slice B from Rejected S-NSSAIs.

5. The UE may send a registration request message with Requested NSSAI = {slice x, slice y}.

6. The AMF may provide the allowed NSSAI = {slice x, slice y} and a new registration area that can support all slices of the allowed NSSAI. For example, the AMF may send a registration accept message to the UE including information related to the allowed NSSAI = {slice x, slice y} and the new registration area.

According to a sixth example of the present disclosure, the UE may remove the rejected S-NSSAI if a slice is available in the serving cell, based on the slice information broadcast via the SIB message.

### 7. A seventh example of the present disclosure

According to the seventh example of of the opening of the present disclosure, the AMF may transmit conditionally allowed NSSAI information to the UE.

There may be issues similar to those described earlier (e.g., if a UE receives a rejected NSSAI including a requested slice, the UE may not be able to request that slice again until it leaves the registration area). For example, in a situation where the slice requested by the UE is supported by the base station to which the UE is currently connected, the AMF may determine the registration area taking into account the mobility of the UE. In this case, not all base stations within the registration area may support the slice requested by the terminal.

In this case, in order to provide the slice requested by the terminal, the AMF can only configure the registration area with base stations that support the slice requested by the terminal. This may result in the terminal having to perform the mobility registration procedure frequently. For example, in the example in Figure 8, the AMF may configure a registration area that includes only TA2. Then, the UE may need to perform a mobility registration procedure when moving from TA1 to TA1 or TA3.

To resolve these issues, the following methods can be used.

For example, the AMF may send a Conditional Allowed NSSAI to the terminal. When the terminal receives the Conditional Allowed NSSAI, the terminal may use the slice only if, based on the SIB information transmitted by the base station, the allowed slice included in the Conditional Allowed NSSAI is supported by the base station to which it is currently connected.

For example, if the Conditional Allowed NSSAI includes slice x and slice y, the terminal can use PDU Session only for slice x if the base station currently allows only slice x as SIB. In this case, the terminal can establish a PDU session for slice x and can send and receive data.

If a terminal has created a PDU session for slice x, and the terminal moves to a different base station and the base station does not support slice x, the network may deactivate or release the PDU session for slice x. The network may also deactivate or release the PDU session for slice x if the terminal does not support slice x. For example, based on information related to the base station (e.g., RAN NGAP ID), User Location Information (ULI) information, information related to the slice supported, information that the slice of the PDU Session cannot be supported, etc. included in the signaling (e.g., Path Switch Request, Handover Notify, etc.) that the base station sends to the AMF in the course of performing the Handover (HO) procedure, the AMF may determine whether the base station supports the slice, and the AMF may perform the deactivation based on the information.

For example, when an AMF receives a Handover Notify, it may request the SMF to deactivate/release a PDU Session for which the slice is not supported at that base station. Upon receipt, the SMF may perform the deactivation procedure (3GPP TS 23.502 V17.3.0 clause 4.3.7) or the release procedure (3GPP TS 23.502 V17.3.0 clause 4.3.4).

In addition, when an activation occurs for a deactivated PDU Session, the AMF may check whether the base station of the terminal (the current base station if the terminal is connected, or the base station that sent the service request/registration request to the AMF if the terminal is idle) supports the slice of the PDU Session to be activated. If the base station does not support the slice, the AMF may reject the SMF's request to send N2 information.

When deciding whether to send a Conditional Allowed NSSAI, the AMF may take into account the capability information of the terminal and the slice information supported by the base stations in the terminal's registration area. In addition, a slice in a Conditional Allowed NSSAI shall not be included in an Allowed NSSAI or a Rejected NSSAI or a Pending NSSAI.

Note that instead of issuing a conditional Allowed NSSAI separately, the AMF can also send an Allowed NSSAI and add a separate cause to indicate whether it is conditional.

The slice information transmitted by the base station to the SIB may also be transmitted in the form of a group slice group, as described in the sixth example of the present disclosure.

### 8. An eight example of the present disclosure

The eight example of the present disclosure describes a specific example according to Example 2 of the present disclosure.

The eight example of the present disclosure describes one example of a network-triggered update of a rejected NSSAI.

In accordance with the eight example of the present disclosure, support for RAs, including TAs that support rejected S-NSSAIs, may be improved. To support legacy UEs, according to the eight example of the present disclosure, the AMF may use the same mechanism to determine RA for legacy UEs as for UEs that will be implemented under future standards.

When a UE requests a slice, the AMF shall reject the UE's request if the requested slice is not supported in the current TA. The AMF may then provide the slice to the UE by including it in a rejected NSSAI with a cause indicating that the slice is not available in the current registration area. The AMF does not need to store the rejected S-NSSAI.

In the eighth example of the present disclosure, it is proposed that the AMF stores the rejected S-NSSAI provided to the UE. When the AMF detects that the UE is moving within its current registration area to an area where the rejected S-NSSAI is supported, the AMF may trigger the UE Configuration Update procedure and remove the S-NSSAI from the rejected NSSAI.

The AMF is not required to store all rejected S-NSSAIs with a cause indicating that the slice is not available in the current registration area. The AMF may decide to store an S-NSSAI if the S-NSSAI is available in any TA in the RA. In addition, to reduce AMF load and signaling due to UE Configuration Update, operators can set AMF with local policies. For example, the operator may set the AMF a candidate list of slices that may be stored when a slice is rejected. The AMF may take into account the capabilities of the UE. For example, if the UE supports other solutions that affect the UE, the AMF does not need to store rejected NSSAIs for the UE.

For example, the AMF may store a rejected NSSAI issued to a terminal only if the terminal does not support the associated TA information for the rejected NSSAI, as in the first example of the present disclosure, i.e., the AMF may decide to store the rejected NSSAI based on the capability information that the terminal transmitted to the AMF during the registration procdure.

In addition, when a terminal is IDLE, the AMF cannot know the exact location of the terminal. Therefore, to notify the terminal that a slice is available as soon as possible, the AMF may keep the terminal connected if a slice-available TA is nearby, or it may set a smaller timer value when sending the terminal a periodic registration timer. If the terminal's periodic timer is set to a smaller value, the terminal will need to perform the periodic registration procedure less frequently, and the AMF will be able to learn about the TA to which the terminal is connected more quickly.

If the AMF removes the rejected S-NSSAI based on the UE Configuration Update procedure, the AMF may include the S-NSSAI in the UE's Allowed NSSAI to reduce further signaling with the UE based on the operator's local policy.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

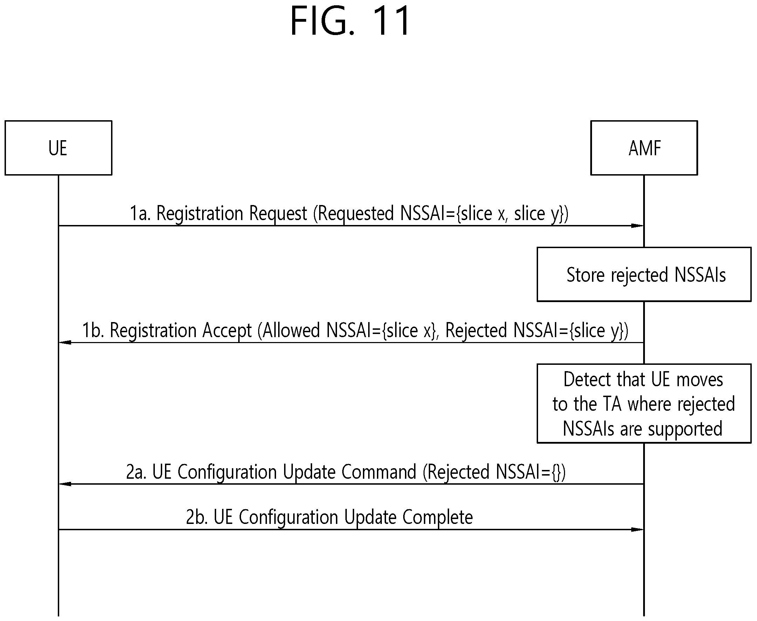

**FIG. 11** **illustrates an example of a procedure according to the eighth example of the present disclosure.**

The example in FIG. 11 illustrates one example of the procedure involved in a network-triggered Rejected NSSAI update.
1. The UE sends a registration request message with Requested NSSAI = {slice x, slice y}. The AMF determines the UE's registration area and may send a registration acceptance message to the UE including allowed NSSAI = {slice x} and rejected NSSAI = {slice y} because slice y is not currently supported in the TA. The AMF may store the rejected S-NSSAI if the operator's local policy is satisfied.
2. The AMF may detect that a UE has moved to a TA that supports a stored rejected S-NSSAI. The AMF may trigger a UE configuration update procedure to remove the rejected S-NSSAIs currently available in the TA. Based on the operator's policy, rejected S-NSSAIs may be included in the Allowed NSSAIs to reduce further signaling with the UE.

The AMF stores the rejected S-NSSAI for the UE and may remove the rejected S-NSSAI when the UE moves to a region with a rejected S-NSSAI according to operator policy.

### 9. A ninth example of the present disclosure

A ninth example of the present disclosure describes an example in which a combination of embodiments comprising at least one example of any of the first through eighth examples of the present disclosure is applied.

### 9-1. Support of Non-homogeneous slice support within a Registration Area

In a ninth example of the present disclosure, non-homogeneous slice support within a Registration Area is proposed.

The UE and AMF may support inhomogeneous slicing within the UE's registration area. If the UE supports inhomogeneous slicing, the UE may indicate its support in the 5GMM feature. If the AMF determines the UE's registration area and the S-NSSAI in the requested NSSAI is not uniformly supported in the registration area, the AMF may include the S-NSSAI in the rejected NSSAI or allowed NSSAI, along with the Tracking Area information, and transmit it to the UE.

Note: The decision whether to provide slices to rejected NSSAI(s) or allowed NSSAI(s) is an S-NSSAI specific decision based on AMF policies, for example, whether NSAC is enforced for the S-NSSAI may be considered. Both options may be supported by the PLMN and may be applied to UEs for different S-NSSAIs simultaneously.

The AMF may determine that a UE must perform a registration procedure before it can use a supported S-NSSAI in a subset of the Registration Area. The AMF may then provide a rejected S-NSSAI including that S-NSSAI, along with the Tracking Area information where the S-NSSAI is or is not supported. If a UE wants to use S-NSSAI and the UE moves into a Tracking Area where S-NSSAI is supported, the UE may trigger the registration procdure to request S-NSSAI.

If the AMF determines that the UE does not need to perform a registration procedure before using an S-NSSAI supported by a subset of the Registration Area, the AMF may provide the UE with the S-NSSAI in the Allowed NSSAI together with the Tracking Area information where the S-NSSAI is or is not supported. The AMF may provide the S-NSSAI in the Allowed NSSAI to the (R)AN without including the Tracking Area information for which the S-NSSAI is supported. If the UE has a PDU session associated with S-NSSAI and the UE moves outside the Tracking Area where S-NSSAI is supported, the AMF may request the SMF to disable the associated PDU session.

The UE can perform actions such as the following examples:
a) When the UE leaves the Tracking Area where S-NSSAI is supported, the UE may:
   - the UE can choose not to request PDU session establishment using S-NSSAI;
   - the UE may not establish/modify PDU sessions for S-NSSAI;
   - Unless the UE receives an explicit SM PDU session release command message from the network, the UE does not need to release the existing PDU session to the S-NSSAI.
b) When the UE is in a Tracking Area where S-NSSAI is supported, the UE may:
   - the UE can trigger the PDU session setup procedure without triggering the registration procedure;
   - the UE can request to activate the UP connection of an existing PDU Session for S-NSSAI.

The previous example described the AMF sending a TA list with information related to whether a slice is supported or not, but this is just an example. If you need to support smaller units, the AMF might send a cell list instead of a TA list. Alternatively, the AMF can send a TA + cell list at the same time. It is also possible to prevent EPC interworking or handover to non-3GPP access for PDU sessions using slices that are not supported homogeneously in the registration area. If a terminal performs a handover to a non-3GPP access, the AMF can check the slice of the PDU Session to prevent the terminal from requesting a handover.

### 9-2. Application examples for the registration procedure

Embodiments comprising at least one example of any of the first through ninth examples of the present disclosure can also be applied to the registration procdure described with reference to Figures 6a and 6b.

For example, for step 1 of FIGS. 6a and 6b, the following description may apply:
If a UE supports non-homogeneous slices within its registration area, the UE may indicate the "Support non-homogeneous slices" capability in its UE Mobility Management (MM) Core Network Capability. For example, the UE may send a registration request message that includes the UE MM Core Network Capability information, and the UE MM Core Network Capability information may include the "non-homogeneous slice support" capability.

For example, for step 21 of FIGS. 6a and 6b, the following description may apply:
If the UE has indicated support for non-homogeneous slices in the UE 5GMM Core Network Capability, the AMF may include in the rejected S-NSSAI or allowed NSSAI the S-NSSAI(s) that are supported in a subset of the UE's registration area (e.g., some of the TAs included in the registration area). In this case, the AMF may provide the Tracking Area information for which the S-NSSAI(s) are or are not supported. The UE may receive a rejected S-NSSAI including the S-NSSAI along with the Tracking Area information. When the UE moves from a Tracking Area where S-NSSAI is supported, the UE may trigger the registration procedure and include the corresponding S-NSSAI in the requested NSSAI. If the UE receives Allowed NSSAI with Tracking Area information including an S-NSSAI, and the UE is located in a Tracking Area where that S-NSSAI is supported, the UE may establish a PDU session using the S-NSSAI without performing the registration procedure.

### 9-3. Example Application to a Service Request

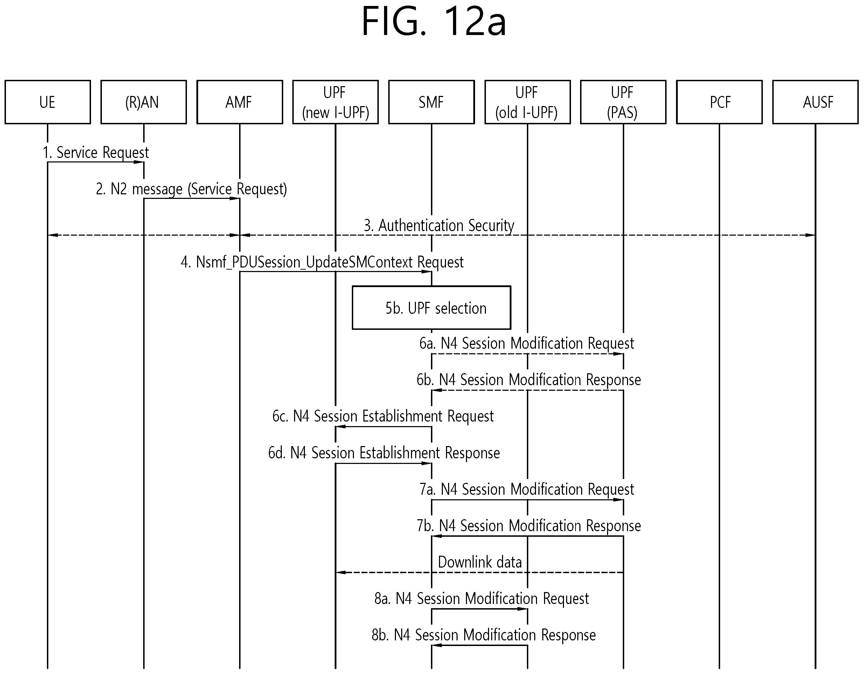

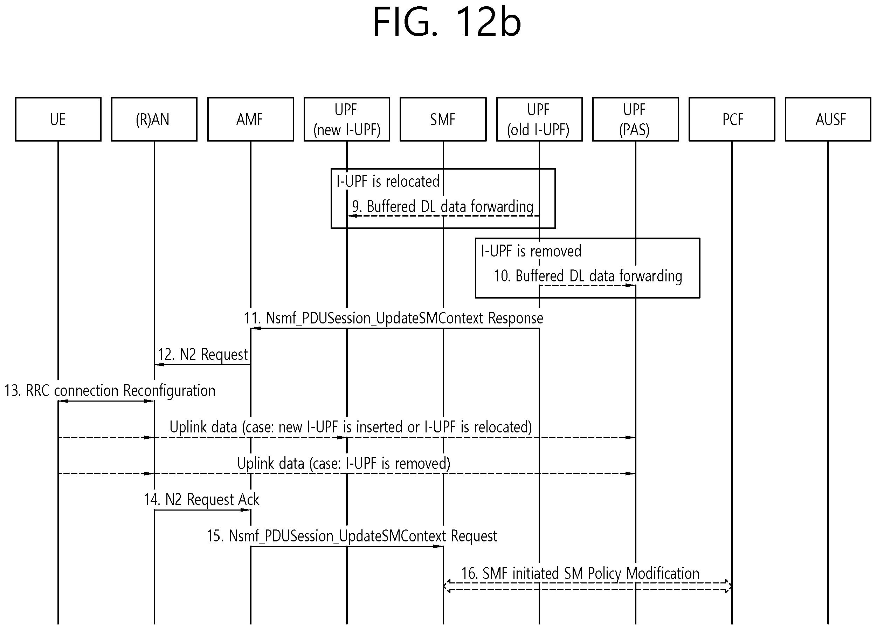

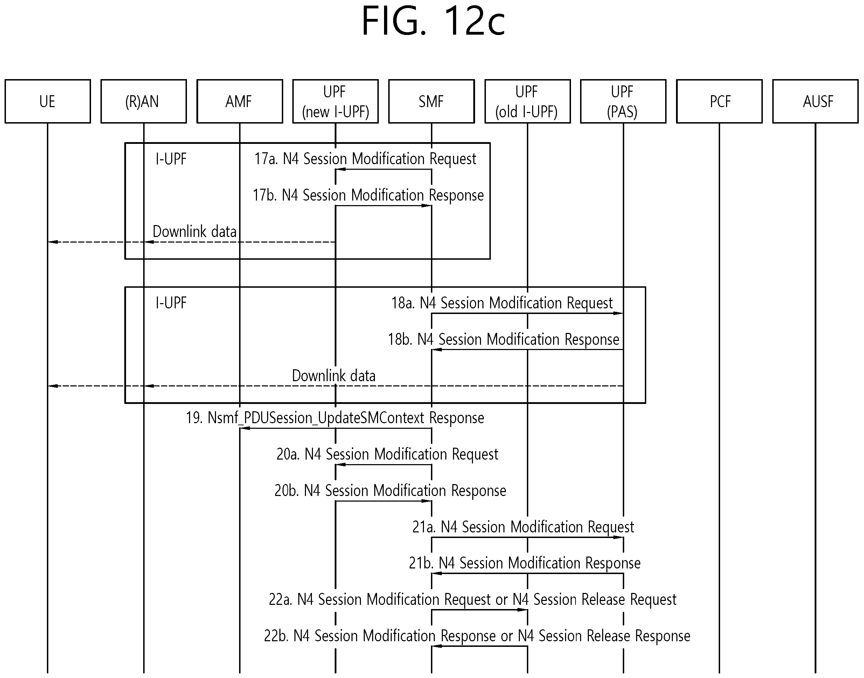

Embodiments comprising the example of at least one of Examples 1 through 9 of the present disclosure can also be applied to the service request process illustrated in FIGS. 12a through 12c.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIGS. 12a through 12c** **illustrate an example of a UE-triggered service request procedure.**

FIGS. 12a to 12c illustrate example UE triggered service request procedures. For the specific procedures illustrated in FIGS. 12a to 12c, reference may be made to Clause 4.2.3.2 UE Triggered Service Request of 3GPP TS 23.502 V17.3.0. For the remaining operations, except for the application examples described below, Clause 4.2.3.2 UE Triggered Service Request of 3GPP TS 23.502 V17.3.0 may be applied as is.

For step 4) in the example of FIGS. 12a to 12c, the following description may apply:
The AMF may send a message based on the Nsmf_PDUSession_UpdateSMContext Request to the SMF. The message based on the Nsmf_PDUSession_UpdateSMContext Request may include information such as PDU Session ID(s), Operation Type, UE location information, Access Type, RAT Type, UE presence in LADN service area, Indication of Access Type can be changed, and/or [MO Exception Data Counter].

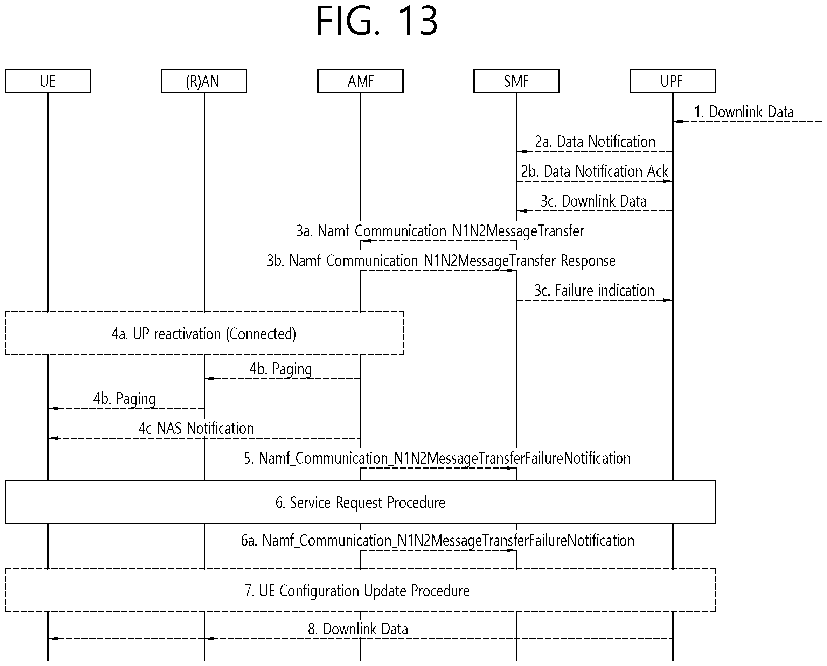

The Nsmf_PDUSession_UpdateSMContext Request may be invoked in the following example cases. For example, if the S-NSSAI associated with the N2 SM information is not supported at the current UE location, the AMF may not send the N2 SM message provided in step 3a of FIG. 13.

Embodiments comprising the example of at least one of the first through ninth examples of the present disclosure can also be applied to the service request process illustrated in FIG. 13.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 13** **illustrates an example of a network-triggered service request procedure.**

FIG. 13 shows an example of a network triggered service request procedure. For the specific procedure illustrated in Figure 13, reference may be made to Clause 4.2.3.3 Network Triggered Service Request of 3GPP TS 23.502 V17.3.0. For the remaining operation, except for the application examples described below, Clause 4.2.3.3 Network Triggered Service Request of 3GPP TS 23.502 V17.3.0 may be applied as is.

For step 3b, the following explanation may apply:
The AMF may respond to the SMF. If the AMF detects that the request from the SMF is associated with an S-NSSAI that is not supported at the current UE location, the AMF may reject the request from the SMF and inform the SMF that the S-NSSAI is not supported at the current UE location.

### 9-4. Application example for UE Configuration Update procedure

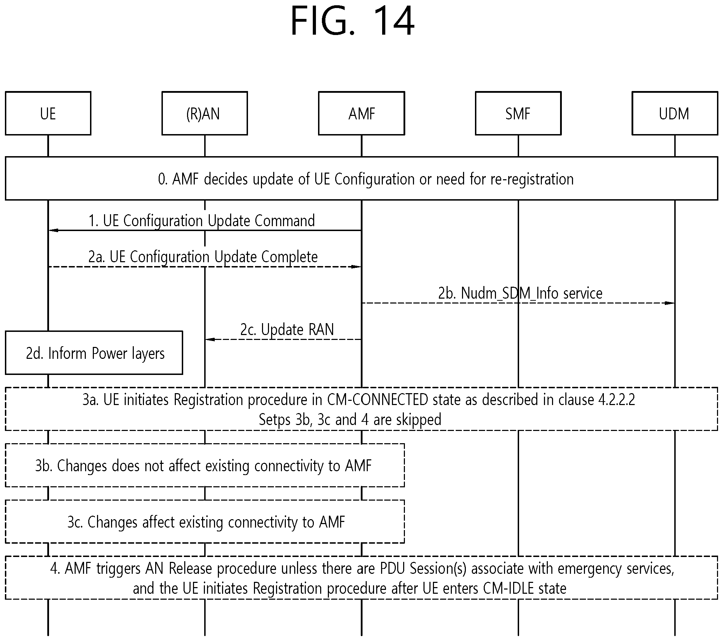

An embodiment comprising the example of at least one of the first through ninth examples of the present disclosure may also be applicable to the UE configuration update procedure illustrated in FIG. 14.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 14** **illustrates an example of a UE configuration update procedure.**

FIG. 14 shows an example of a UE configuration update procedure for access and mobility management related parameters. For the specific procedure illustrated in Figure 14, reference may be made to Clause 4.2.4.2 UE Configuration Update procedure for access and mobility management related parameters in 3GPP TS 23.502 V17.3.0. For the remaining operation, except for the application examples described below, Clause 4.2.4.2 UE Configuration Update procedure for access and mobility management related parameters in 3GPP TS 23.502 V17.3.0 may be applied as is.

For step 1, the following descriptions may apply.

If the UE has indicated support for non-homogeneous slices in the UE 5GMM Core Network Capability, the AMF may include S-NSSAI(s) supported in a subset of the UE's Registration Area in the Allowed NSSAI. In this case, the AMF may provide the Tracking Area information for which the S-NSSAI(s) are or are not supported.

### 9-5. Example application for selective disabling(or deactivating) of UP connections in an existing PDU session

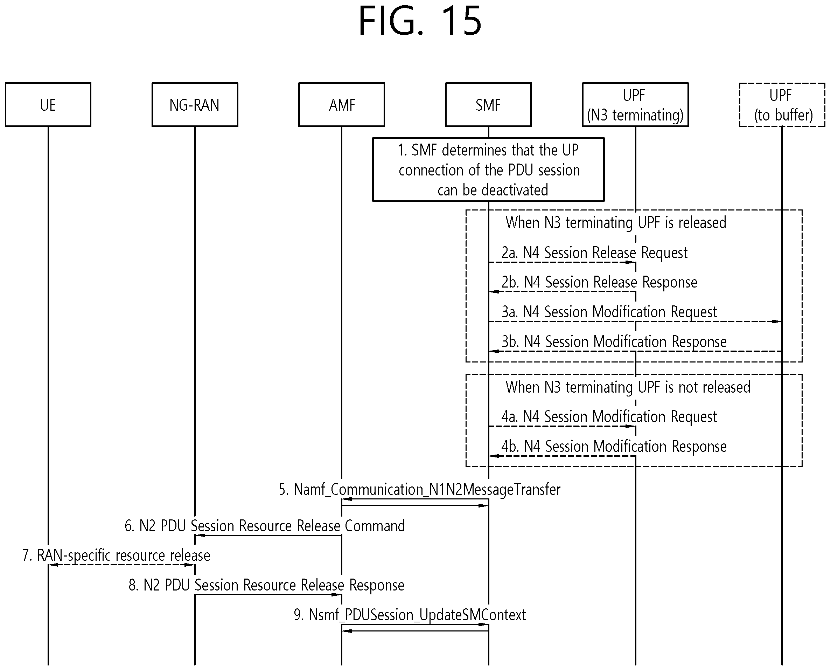

Embodiments comprising the example of at least one of the first to ninth examples of the present disclosure may also apply to the selective disabling of UP connectivity of an existing PDU session illustrated in FIG. 15.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 15** **illustrates an example of a procedure for selectively deactivating the UP connection of a CN-initiated existing PDU session.**

FIG. 15 shows an example procedure for CN-initiated selective deactivation of UP connection of an existing PDU Session. For the specific procedure illustrated in Figure 15, reference may be made to Clause 4.3.7 CN-initiated selective deactivation of UP connection of an existing PDU Session in 3GPP TS 23.502 V17.3.0. For the remaining operation, except for the application examples described below, Clause 4.3.7 CN-initiated selective deactivation of UP connection of an existing PDU Session in 3GPP TS 23.502 V17.3.0 may be applied as is.

For step 1, the following descriptions may apply
The AMF may notify the SMF that the UE has moved outside the slice coverage area where the slice is supported. In this case, the SMF may decide that it can disable the UP connection of the PDU session.

### 9-6. Application Example for inter NG-RAN Handover

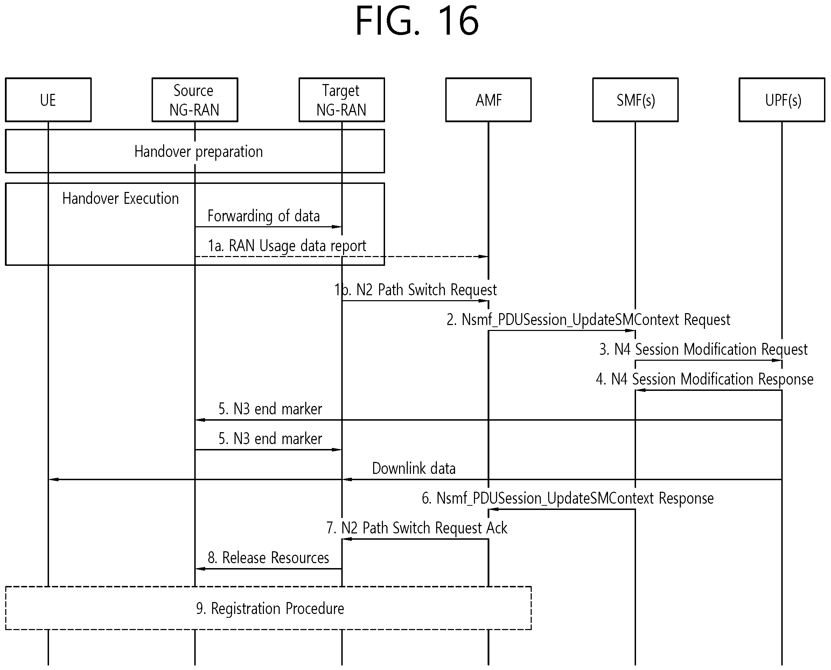

Embodiments comprising the example of at least one of the first through ninth examples of the present disclosure may also be applicable to the inter NG-RAN handover illustrated in FIG. 16.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 16** **illustrates an example of an inter NG-RAN handover procedure.**

FIG. 16 illustrates an example of Xn based inter NG-RAN handover without User Plane function re-allocation. For the specific procedure illustrated in Figure 16, reference may be made to Clause 4.9.1.2.2 Xn based inter NG-RAN handover without User Plane function re-allocation in 3GPP TS 23.502 V17.3.0. For the remaining operation, except for the application examples described below, Clause 4.9.1.2.2 Xn based inter NG-RAN handover without User Plane function re-allocation in 3GPP TS 23.502 V17.3.0 may be applied as is.

For step 2, the following comments can apply
The AMF may send a request message (e.g., a request message based on Nsmf_PDUSession_UpdateSMContext Request) to the SMF. If the AMF determines that the PDU Session is related to an S-NSSAI that is not supported at the current UE location, the AMF may inform the SMF that the S-NSSAI is not supported at the current UE location. The SMF may disable the UP connection of the PDU session.

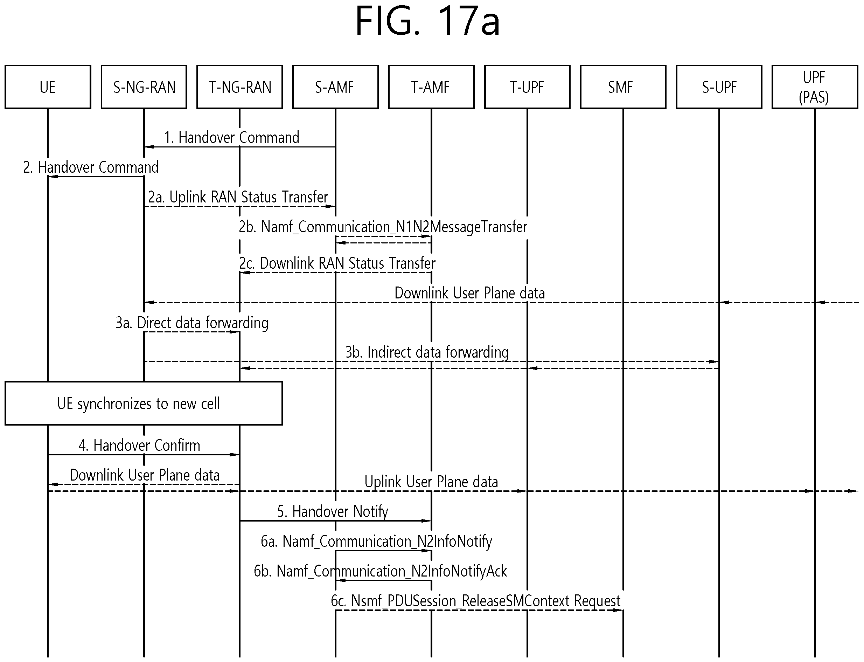

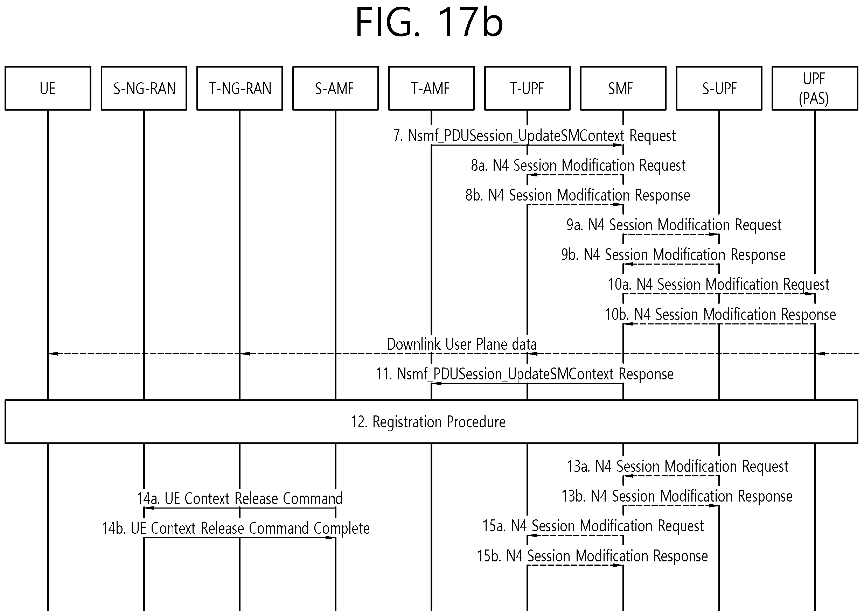

Embodiments comprising the example of at least one of the first through ninth examples of the present disclosure may also be applicable to the execution steps of the inter NG-RAN handover illustrated in FIGS. 17a and 17b.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIGS. 17a** **and** **17b** **illustrate an example of an inter NG-RAN handover procedure.**

FIGS. 17a and 17b illustrate an example of the execution phase of an inter NG-RAN node Xn based handover (inter NG-RAN node N2 based handover, execution phase). For the specific procedure illustrated in FIGS. 17a and 17b, reference may be made to clause 4.9.1.3.3.3 Execution phase of 3GPP TS 23.502 V17.3.0. For the remaining operations, except for the application examples described below, Clause 4.9.1.3.3.3 Execution phase of 3GPP TS 23.502 V17.3.0 may be applied as is.

For step 7, the following descriptions may apply
The AMF may send a request message (e.g., a request message based on Nsmf_PDUSession_UpdateSMContext Request) to the SMF. If the AMF determines that the PDU Session is related to an S-NSSAI that is not supported at the current UE location, the AMF may inform the SMF that the S-NSSAI is not supported at the current UE location. The SMF may disable the UP connection of the PDU session.

### 10. A tenth example of the present disclosure

The tenth example of the present disclosure may represent a specific embodiment based on a combination of at least one of the first through ninth examples of the present disclosure.

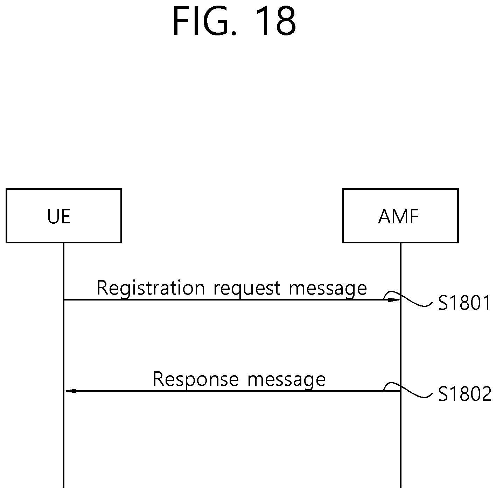

In the following, with reference to FIG. 18, examples of actions performed by various entities, such as operations of a UE, operations of an AMF, and the like, in accordance with various examples of the present disclosure will be described.

The following drawings are intended to illustrate specific embodiments of the present disclosure. The designations of specific terminals or the designations of specific signals/messages/fields shown in the drawings are for illustrative purposes only, and the technical features of the present disclosure are not limited to the specific designations used in the drawings below.

**FIG. 18** **illustrates an example of a procedure according to the tenth example of the present disclosure.**

The example of FIG. 18 illustrates one example of the operation of a terminal (e.g., UE) and/or a network (e.g., AMF, UPF, SMF, etc.) in accordance with various examples of the present disclosure described above. Note that the operation of the terminal and/or the operation of the network described in the example of FIG. 18 is illustrative only, and the scope of the present disclosure is not limited by what is described in the example of FIG. 18. For example, the terminal and/or network may perform any of the operations previously described in the first example through the ninth example of the present disclosure, even if not illustrated in the example of FIG. 18.

At step S1801, the UE may transmit a registration request message to the AMF. For example, the registration request message may include a requested NSSAI that includes information related to one or more network slices requested by the UE.

At step S1802, the AMF may send a response message to the UE. It is possible that some of the network slices requested by the UE are only supported in a subset of the registration area (e.g., in one or more of the many TAs included in the registration area). In this case, the AMF may include information on the network slices that are supported at the current UE location in the Allowed NSSAI and information on the network slices that are not supported at the current UE location in the rejected NSSAI.

As described in one embodiment of the present disclosure, latency to the service can be reduced by allowing the terminal to request a slice again when the terminal moves to an area where a slice received in a rejected NSSAI from the network is available. For example, a terminal is allowed to request a slice without leaving the Registration area. This also reduces signaling for mobility management because the AMF does not need to make the registration area smaller because of the slice.

As described in one embodiment of the present disclosure, the AMF may transmit the rejected NSSAI to the terminal together with the area information (e.g., TA) for which the slice is rejected. The terminal may delete the rejected slice from the rejected NSSAI and perform the registration procdure again if it moves out of the rejected area, even if it is within the same registration area.

As described in one embodiment of the present disclosure, when an AMF sends a rejected NSSAI to a terminal, the AMF may store the rejected NSSAI. Then, when the AMF moves to a region where the rejected NSSAI becomes available again, the AMF may update the rejected NSSAI to the terminal or update the allowed NSSAI.

As described in one embodiment of the present disclosure, there may be instances where a slice is available in another TA within the current registration area of the terminal when the AMF sends a rejected NSSAI to the terminal. In this case, the AMF sends a new cause to the terminal indicating this, and the terminal may, based on that cause, delete the slice with the new cause from the rejected NSSAI when the terminal moves to a different TA so that the terminal can request the slice again.

As described in one embodiment of the present disclosure, when a terminal receives a rejected NSSAI, based on SIB information transmitted by the base station, the terminal may delete the rejected NSSAI or include the slice information in the allowed NSSAI.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE, UE-to-Network Relay) described in the present disclosure of the present specification.

For reference, the operation of a network node (e.g., AMF, UPF, SMF, etc.) or base station (e.g., NG-RAN, gNB, eNB, RAN, E-UTRAN etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing a communication the method performed by an Access and Mobility Management Function (AMF) and comprising:
receiving, from a User Equipment (UE), a registration request message including requested network slice selection assistance information (NSSAI) information; and
transmitting a response message to the UE in response to the registration request message,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.

2. The method of claim 1,
wherein the first TA list includes one or more TAs included in the registration area of the UE.

3. The method of claim 1, further comprising:
based on the UE moving to a TA included in the first TA list, receiving a registration request message including a requested NSSAI including information related to the first network slice from the UE.

4. The method of claim 1,
wherein the response message includes a cause value related to that the first network slice was rejected for a TA that is not included in the first list of TAs in the registration area.

5. The method of claim 1, further comprising:
receiving capability information related to that the UE supports non-homogeneous slices, from the UE.

6. An Access and Mobility Management Function (AMF) for performing a communication, the AMF comprising:
at least one processor; and
at least one memory that stores instructions and is operably electrically coupled to the at least one processor,
based on being executed by the at least one processor, perform operations comprising:
receiving, from a User Equipment (UE), a registration request message including requested network slice selection assistance information (NSSAI) information; and,
transmitting a response message to the UE in response to the registration request message,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.

7. A method for performing a communication the method performed by a User Equipment (UE), and comprising:
transmitting a registration request message including requested network slice selection assistance information (NSSAI) information to an Access and Mobility Management Function (AMF); and
receiving a response message in response to the registration request message from the UE,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.

8. The method of claim 7,
wherein the first TA list includes one or more TAs included in the registration area of the UE.

9. The method of claim 7, further comprising:
based on the UE moving to a TA included in the first TA list, transmitting a registration request message including a requested NSSAI including information related to the first network slice to the AMF.

10. The method of claim 7,
wherein the response message includes a cause value related to that the first network slice was rejected for a TA that is not included in the first list of TAs in the registration area.

11. The method of claim 7, further comprising:
transmitting capability information related to that the UE supports non-homogeneous slices, to the AMF.

12. A User Equipment (UE) for performing a communication,
at least one processor; and
at least one memory that stores instructions and is operably electrically coupled to the at least one processor,
based on being executed by the at least one processor, perform operations comprising:
transmitting a registration request message including requested network slice selection assistance information (NSSAI) information to an Access and Mobility Management Function (AMF); and
receiving a response message in response to the registration request message from the UE,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.

13. The UE of claim 12,
wherein the UE is an autonomous driving device in communication with at least one of a mobile terminal, a network, and an autonomous vehicle other than the UE.

14. An apparatus in mobile communciation comprising:
at least one processor; and
at least one memory that stores instructions and is operably electrically coupled to the at least one processor,
based on being executed by the at least one processor, perform operations comprising:
generating a registration request message including requested network slice selection assistance information (NSSAI) information; and
obtaining a response message in response to the registration request message,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.

15. A non-transitory Computer Readable Medium (CRM) storing instructions
based on the instructions being executed by at least one processor, perform operations comprising:
generating a registration request message including requested network slice selection assistance information (NSSAI) information; and
obtaining a response message in response to the registration request message,
wherein the response message includes allowed NSSAI information and rejected NSSAI information,
wherein the requested NSSAI includes information related to a first network slice and information related to a second network slice, and
wherein the response message includes information related to a list of first tracking areas (TA) list in which the first network slice being available, based on that the rejected NSSAI information includes information related to the first network slice.
